# FASCICULE DE BREVET EUROPEEN

(11) **EP 3 455 508 B1**
(45) Date de publication et mention de la délivrance du brevet: **04.03.2020**
(21) Numéro de dépôt: 17726134.4
(22) Date de dépôt: 03.05.2017
(51) Int. Cl.: F16B 21/02, B60R 7/02, B60R 7/00, E05B 79/00, E05B 83/28, B60R 11/06, H05K 7/14

(54) **DISPOSITIF DE RANGEMENT POUR VEHICULE AUTOMOBILE**
SPEICHERVORRICHTUNG FÜR EIN KRAFTFAHRZEUG
STORAGE DEVICE FOR A MOTOR VEHICLE

(30) Priorité: 09.05.2016 FR 1654117
(43) Date de publication de la demande: 20.03.2019
(73) Titulaire: PSA Automobiles SA, 78300 Poissy (FR)
(72) Inventeur: FIGENT, Michel, 25260 Longevelle Sur Doubs (FR)
(86) Numéro de dépôt international: PCT/FR2017/051057
(87) Numéro de publication internationale: WO 2017/194858

(56) Documents cités:
- EP-A2- 1 452 748
- GB-A- 2 224 072
- US-A1- 2005 159 030

## Description

La présente invention concerne de manière générale un dispositif de rangement pour un véhicule automobile. La présente invention concerne en outre un véhicule automobile équipé d'un tel dispositif de rangement.

Il est connu dans l'art antérieur des dispositifs de rangement comprenant une pièce de verrouillage apte à verrouiller une trappe de fermeture sur une ouverture du dit rangement.

Le document FR2902846 décrit un dispositif de rangement comprenant une pièce de verrouillage pour verrouiller un habillage d'une paroi de coffre automobile. En contrepartie, ce système présente l'inconvénient de mal isoler du bruit venant de l'intérieur de l'espace de rangement vers l'habitable du véhicule, ainsi que de présenter une durée de vie limitée liée au bras de levier de la portion de verrouillage.

Le document GB2224072 décrit une pièce de verrouillage pour un dispositif de rangement selon le préambule de la revendication 1.

Un but de la présente invention est de répondre aux inconvénients du document de l'art antérieur mentionnés ci-dessus et en particulier, de proposer un dispositif de rangement doté d'un système de verrouillage fiable et transmettant le moins de bruit possible entre l'espace de rangement et l'habitacle du véhicule.

Pour cela un premier aspect de l'invention concerne un dispositif de rangement pour un véhicule comprenant :
- au moins une paroi formant un espace de rangement,
- une trappe agencée pour fermer et ouvrir l'espace de rangement, et
- une pièce de verrouillage agencée pour passer, par un mouvement, d'une position verrouillée, dans laquelle la trappe est verrouillée à ladite au moins une paroi, à une position déverrouillée, dans laquelle la trappe n'est pas verrouillée à ladite au moins une paroi, ladite pièce de verrouillage comprenant pour cela :
   - une surface continue d'appui agencée pour être reçue en contact sur une surface continue d'appui correspondante de la trappe au moins dans la position verrouillée,
   - une portion de verrouillage agencée pour être reçue en contact sur ladite au moins une paroi au moins dans la position verrouillée,
ladite pièce de verrouillage comprenant en outre des moyens d'attache distincts de la surface continue d'appui et de la portion de verrouillage et agencés pour attacher ladite pièce de verrouillage sur la trappe, au moins dans la position déverrouillée, le mouvement de la pièce de verrouillage est un mouvement de rotation, par exemple d'un quart de tour, ladite portion de verrouillage comprend deux surfaces d'appui allongées symétriques et transversales par rapport à l'axe longitudinal, et ladite au moins une paroi présente un trou de passage allongé pour laisser passer la portion de verrouillage, et en ce que ledit trou de passage allongé est pourvu, au moins sur un bord, d'une arrête comprenant une portion biseautée ainsi qu'une surface de butée, la dite arrête étant agencée pour être en contact avec ladite portion de verrouillage dans la position verrouillée. Préférentiellement, deux arrêtes symétriques sont pourvues sur deux bords du trou, de façon à accueillir les deux surfaces d'appui allongées symétriques de la portion de verrouillage de la pièce de verrouillage. Ces modes de réalisation permettent une mise en tension progressive de la pièce de verrouillage, résultant en un contact sous pression de la surface d'appui de la pièce de verrouillage sur la surface d'appui correspondante de la trappe et donc une meilleure étanchéité à l'air ainsi qu'une meilleure résistance aux vibrations.

La fonction d'attache de la pièce de verrouillage à la trappe est donc découplée de la fonction de verrouillage, qui est réalisée par la surface continue d'appui et par la portion de verrouillage. Ceci permet au dispositif de verrouillage selon la présente invention d'avoir une durée de vie étendue et une grande fiabilité de fonctionnement. De plus, le passage de l'air et donc le bruit transmis par la pièce de verrouillage est limité ou annulé grâce au contact entre la surface continue d'appui de la pièce de verrouillage et la surface continue d'appui correspondante de la trappe au moins dans la position verrouillée.

Ce dispositif de rangement est préférentiellement intégré dans un habitacle de véhicule automobile, tel qu'une automobile, un bus, un camion ou un deux-roues. Par exemple, le dispositif de rangement est un rangement pour triangle de signalisation embarqué dans un coffre de véhicule automobile.

Avantageusement, ladite pièce de verrouillage présente un axe longitudinal et ladite surface continue d'appui ainsi que ladite portion de verrouillage sont transversales à l'axe longitudinal. Ceci permet d'obtenir une pièce de verrouillage simple à fabriquer permettant des mouvements de rotation et/ou translation par rapport à la trappe.

Avantageusement, les moyens d'attache sont des moyens d'emboitement élastique, c'est-à-dire de clipsage. Ces moyens d'attache permettent un assemblage facile de la pièce de verrouillage à la trappe, ainsi qu'un changement aisé de la pièce de verrouillage en cas de nécessité.

Avantageusement, les moyens d'attache sont situés entre la surface continue d'appui de la pièce de verrouillage et la portion de verrouillage de la pièce de verrouillage. En particulier, les moyens d'attache peuvent comprendre au moins un bras flexible pourvu d'une gorge circonférentielle. Préférentiellement, les moyens d'attaches comportent au moins deux bras flexibles pourvus chacun d'une gorge circonférentielle. De manière encore préférentielle, les moyens d'attaches comportent quatre bras flexibles pourvus chacun d'une gorge circonférentielle. Le fait d'intégrer ces moyens d'attache sur la pièce de verrouillage permet de résoudre la majorité des défauts du dispositif de rangement par un simple échange de la pièce de verrouillage.

Avantageusement, la gorge circonférentielle de l'au moins un bras flexible est agencée de telle sorte à s'emboiter ou à s'engager avec une portion d'attache de ladite trappe au moins dans la position déverrouillée. Préférentiellement, la gorge circonférentielle est ouverte sur le côté opposé à l'axe longitudinal A-A'. Ce mode de réalisation permet d'obtenir une pièce de verrouillage peu couteuse à fabriquer.

De manière également avantageuse, la pièce de verrouillage est monolithique, monobloc ou d'un seul tenant, c'est-à-dire sans assemblage. Ceci permet une fabrication simple et peu couteuse de la pièce de verrouillage, par exemple par injection-moulage.

Un second aspect de l'invention est un véhicule automobile comportant au moins un dispositif de rangement selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de trois quarts arrière d'une pièce de verrouillage selon la présente invention, destinée à verrouiller la trappe du dispositif de rangement à la paroi formant l'espace de rangement,
- la figure 2 représente une vue latérale en coupe de la pièce de verrouillage selon la figure 1, dans une position verrouillée dans laquelle la pièce de rangement maintient la trappe verrouillée à la paroi formant l'espace de rangement,
- la figure 3 représente une vue de trois quarts arrière de la pièce de verrouillage selon la figure 1, verrouillée sur la face intérieure de la paroi formant l'espace de rangement.

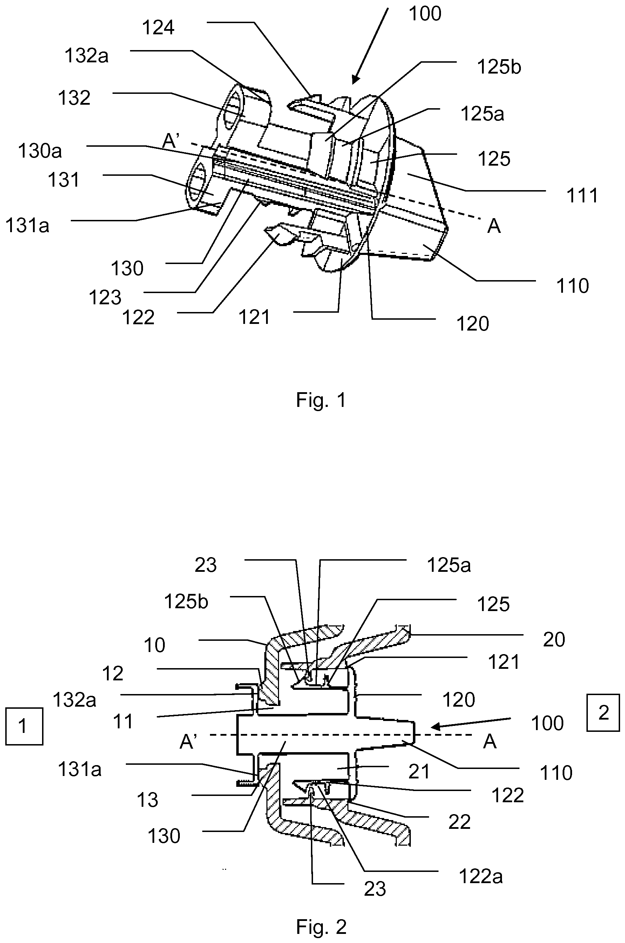

Le dispositif de rangement selon la présente invention comprend une paroi 10 (visible sur la figure 2) formant un espace de rangement 1, par exemple accessible depuis l'habitacle 2 d'un véhicule, ainsi qu'une trappe 20 (visible sur la figure 2) d'ouverture et de fermeture de l'espace de rangement 1, agencée par exemple sur le dessus ou sur un côté de l'espace de rangement. Le dispositif de rangement comprend en outre une pièce de verrouillage 100 (visible sur la figure 1) permettant de verrouiller la trappe 20 à la paroi 10.

La figure 1 représente la pièce de verrouillage 100 du dispositif de rangement selon la présente invention qui est destinée à verrouiller la trappe 20 (non visible sur la figure 1) sur la paroi 10 formant l'espace de rangement (non visible sur la figure 1) quand la trappe 20 ferme l'espace de rangement. La pièce de verrouillage 100 comprend un axe longitudinal A-A' qui est aussi un axe de symétrie.

En partant de la droite de la figure 1, la pièce de verrouillage comprend une portion de commande 110 destinée à être accessible depuis l'habitacle du véhicule automobile. La portion de commande 110 est dotée de deux surfaces parallèles 111 (une seule visible sur la figure 1) agencées de telle sorte à faciliter la préhension et la manipulation de la pièce de verrouillage 100, par exemple par pincement de la portion de commande 110 entre le pouce et l'index.

Au-delà de la portion de commande 110, soit environ au tiers de la longueur de la pièce de verrouillage 100, une couronne 120 est munie d'une surface continue d'appui 121 sur son extrémité radiale. Cette surface continue d'appui est destinée à faire contact avec une surface continue d'appui correspondante de la trappe 20 quand la pièce de verrouillage 100 verrouille la trappe 20 à la paroi 10 formant l'espace de rangement.

La couronne 120 comporte en outre quatre bras flexibles 122, 123, 124, 125 s'étendant de la couronne 120 parallèlement à l'axe A-A' vers la gauche de la pièce sur la figure 1, c'est-à-dire vers l'espace de rangement quand le dispositif de rangement est assemblé. Considérant maintenant le bras flexible 125, celui-ci est pourvu d'une gorge circonférentielle 125a, c'est à dire convexe, ainsi qu'une portion biseautée 125b à l'extrémité du bras flexible opposée à la couronne 120. La gorge circonférentielle 125a est ouverte vers l'extérieur de la pièce, c'est-à-dire à l'opposé de l'axe A-A'. Les autres bras flexibles 122, 123 et 124 sont identiques au bras flexible 125 précédemment décrit. Les bras flexibles 122, 123, 124 et 125 sont destinés à accueillir une portion d'attache de la trappe 20 en emboitement élastique, c'est-à-dire clipsage. Pour cela, des segments d'une portion d'attache de la trappe 20 peuvent être accueillis dans les gorges 125a des bras flexibles 122, 123, 124, 125 qui forment donc des moyens d'attache.

Un arbre longitudinal 130 s'étend en outre à partir du centre de la couronne 120 sur l'axe A-A', c'est-à-dire longitudinalement et vers la gauche de la figure 1, soit en direction de l'espace de rangement quand la pièce de verrouillage 100 verrouille la trappe 20 à la paroi 10.

L'arbre longitudinal 130 comprend une extrémité 130a opposée à la couronne 120 et pourvue de deux protrusions transversales 131, 132 symétriques. Chaque protrusion 131, 132 définit une surface d'appui allongée et transversale 131a, 132a, non visibles directement sur la figure 1 et faisant face à la surface continue d'appui 121. Les protrusions 131, 132 sont destinée à être passées au travers d'une fente ou d'un trou allongé de la paroi 10 de façon à ce que les surfaces d'appui 131a et 132a viennent en contact avec la face de la paroi 10 orientée vers l'intérieur de l'espace de rangement. Les protrusions 131, 132 et les surfaces d'appui 131a, 132a forment donc une portion de verrouillage de la pièce de verrouillage 100.

La pièce de verrouillage 100 comprend en outre des évidements et des surépaisseurs non détaillés. La pièce de verrouillage 100 est fabriquée en polymère ou composite rigide, tel que le polypropylène, le polyéthylène haute densité, le poly(téréphtalate d'éthylène) (PET), le poly(méthacrylate de méthyle) (PMMA), ou le copolymère d'acrylonitrile-butadiène-styrène (ABS). Elle est fabriquée par toute technique adaptée et notamment l'injection-moulage. Alternativement ou en combinaison, la pièce de verrouillage 100 peut comprendre du métal tel que de l'aluminium ou de l'acier.

La figure 2 montre la pièce de verrouillage 100 dans une position de verrouillage, c'est-à-dire verrouillant la trappe 20 à la paroi 10 formant l'espace de rangement 1. Ainsi, à droite de la figure 2, la portion de commande 110 est accessible depuis l'habitacle 2 d'un véhicule automobile. La pièce de verrouillage 100 est passée dans un trou traversant 21 de la trappe 20 ainsi que dans un trou de passage allongé 11 de la paroi 10 aligné sur le trou traversant 21 de la trappe 20.

Du côté de l'espace de rangement 1 (à la gauche de la figure 2), le trou de passage allongé 11 de la paroi 10 est pourvu de deux arrêtes 12, 13 en contact avec les surfaces d'appui 131a, 132a des protrusions 131, 132. Du côté de l'habitacle 2 (à la droite de la figure 2), le trou traversant 21 de la trappe 20 est pourvu d'une surface continue d'appui 22 en contact avec la surface continue d'appui 121 de la couronne 120. La pièce de verrouillage 100 maintient ainsi la paroi 10 et la trappe 20 dans une position verrouillée entre la surface continue d'appui 121 de la couronne 120 et les surfaces d'appui 131a, 132a des protrusions 131, 132. Cette position verrouillée résulte donc en un contact de la trappe 20 sur la paroi 10 et préférentiellement un appui, c'est-à-dire un contact avec une pression. Cette position verrouillée est favorable au niveau du bruit puisque l'échange d'air entre l'espace de rangement 1 et l'habitacle 2 est limité par le contact continu entre les surfaces continues d'appui 121 et 22 de la pièce de verrouillage 100 et de la trappe 20, respectivement. De plus, cette position est parfaitement stable et peut être maintenue sans déformation ou fluage de la pièce de verrouillage 100. Enfin, cette configuration permet de limiter la formation et la diffusion de vibrations.

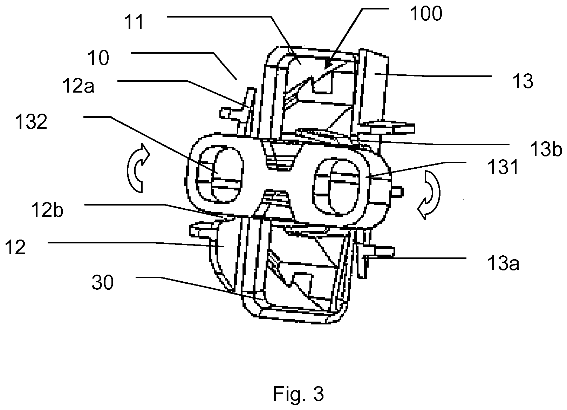

La figure 3 détaille l'interaction entre la portion de verrouillage de la pièce de verrouillage 100 et la paroi 10 dans la position verrouillée, c'est-à-dire la position montrée sur la figure 2. Les surfaces d'appui allongées 131a, 132a (non visibles) des protrusions 131, 132 sont donc en contact sur les arrêtes correspondantes 12, 13 de la paroi 10. Les arrêtes 12, 13 sont en outre munies de portions biseautées 12a, 13a ainsi que de surfaces de butée 12b, 13b.

Indépendamment de la portion de verrouillage comprenant les surfaces d'appui 131a, 132a et de la surface continue d'appui 121, la pièce de verrouillage 100 est attachée à la trappe 20 par emboitement sur une couronne radiale 23 pourvue sur la surface interne du trou traversant 21 grâce aux quatre gorges 122a, 125a des quatre bras flexibles 122 et 125 (seulement deux visibles sur la figure 2). La couronne radiale 23 est d'une épaisseur inférieure à la largeur des gorges 122a et 125a. Ces moyens d'attache permettent donc d'emboiter la pièce de verrouillage 100 à la trappe 20 avec un jeu dans la position déverrouillée, c'est-à-dire quand la pièce de verrouillage 100 ne verrouille pas la trappe 20 à la paroi 10. Ce jeu permet notamment de simplifier la fabrication du dispositif de rangement.

L'assemblage de la pièce de verrouillage 100 à la trappe 20 et à la paroi 10 se fait facilement quand la trappe 20 est dans une position de fermeture de l'espace de rangement 1, telle que visible à la figure 2. La pièce de verrouillage est ainsi positionnée de façon à faire correspondre l'orientation des protrusions 131 et 132 à la forme du trou de passage allongé 11 de la paroi 10. La pièce de verrouillage est alors avancée en direction de l'espace de rangement 1 jusqu'à ce que la couronne 23 du trou traversant 21 vienne en contact avec les portions biseautées 122b, 125b des bras flexibles 122, 123, 124, 125. La pièce de verrouillage 100 est alors encore légèrement avancée, de telle sorte à ce que la couronne 23 fasse fléchir progressivement les bras flexibles du fait de son contact avec les portions biseautées 125b et vienne enfin se loger dans les gorges des quatre bras flexibles 122a et 125a. La pièce de verrouillage 100 est alors attachée à la paroi 20 avec un jeu.

Un mouvement d'un quart de tour est alors transmis à la pièce de verrouillage 100 par sa portion de commande 110, ce qui permet la rotation antihoraire de la portion de verrouillage 131, 132 jusqu'aux surfaces de butées 12b, 13b (voir figure 3). Avant d'atteindre la position finale illustrée aux figures 2 et 3, les surfaces d'appuis 131a, 132a viennent en contact avec les portions biseautées 12a, 13a des arrêtes 12, 13, ce qui met progressivement le système en tension, c'est-à-dire que la surface continue d'appui 121 de la pièce de verrouillage 100 vient progressivement faire pression contre la surface continue d'appui correspondante 22 de la paroi 20, jusqu'à la position verrouillée visible aux figures 2 et 3. Cette mise en tension progressive est permise par le jeu donné par les moyens d'attache 122, 123, 124, 125, 122a, 125a. La position verrouillée limite ou annule ainsi le flux d'air entre l'espace de rangement 1 et l'habitacle 2 et donc le passage de bruit vers l'habitacle 2.

Dans la position verrouillée visible sur les figures 2 et 3, les protrusions 131, 132 sont bloquées par les surfaces de butées 12b, 13b dans le sens antihoraire. Ainsi, une rotation appliquée dans le sens antihoraire à la portion de commande 110 (non visible sur la figure 3) ne permet pas un mouvement de la pièce. Cependant, une rotation horaire appliquée à la portion de commande 110 résulte en une rotation, telle que représentée par les flèches sur la figure 3, de la portion de verrouillage qui comprend les protrusions 131 et 132. Les surfaces d'appui 131a et 132a (non visibles sur la figure 3) entrent alors en contact avec les portions biseautées 12a, 13a des arrêtes 12, 13. La pression d'appui liée au contact entre les surfaces d'appui 131a, 132a des protrusions 131, 132 et la paroi 10 est alors progressivement relâchée, grâce au jeu autorisé par les moyens d'attache 122, 123, 124, 125, 122a, 125a. Après une rotation d'un quart de tour dans le sens horaire, les protrusions 131, 132 sont dans une position parallèle à la position du trou de passage allongé 11 et la portion de verrouillage de la pièce de verrouillage 100 n'est plus en contact avec la paroi 10. La trappe 20 (non visible sur la figure 3) n'est donc plus verrouillée sur la paroi 10 et la pièce de verrouillage 100 est seulement attachée à la trappe 20 par les moyens d'attache 122, 123, 124, 125, 122a, 125a. La pièce de verrouillage 100 reste donc logée dans le trou traversant 21 de la trappe 20 même quand la trappe 20 est dans une position d'ouverture de l'espace de rangement 1.

La symétrie de la pièce de verrouillage 100 autorise deux positionnements différents de la pièce de verrouillage 100 lors de son assemblage à la paroi 10 et à la trappe 20 en usine, ce qui simplifie l'assemblage du dispositif de rangement selon la présente invention. En outre, puisque l'essentiel des moyens nécessaires à l'assemblage et au verrouillage de la trappe 20 à la paroi 10 sont pourvus sur la pièce de verrouillage 100, la pièce de verrouillage 100 peut être remplacée aisément en cas de défaut, que ce soit avant ou après l'assemblage du dispositif de rangement. Par ailleurs, le dispositif de rangement selon la présente invention limite le passage de bruit de l'espace de rangement à l'habitacle grâce à l'appui continu réalisé entre la pièce de verrouillage 100 et la paroi 20. Enfin, le verrouillage est effectué par certains éléments de la pièce de verrouillage 100, à savoir la portion de verrouillage 131, 132 et la surface continue d'appui 121, alors qu'en position déverrouillée, l'attache de la pièce de verrouillage 100 à la paroi 20 est réalisée par d'autres éléments, à savoir les quatre bras flexibles 122, 123, 124, 125 et les quatre gorges circonférentielles 122a, 125a. Ceci permet d'augmenter la durée de vie et la fiabilité du dispositif de rangement selon la présente invention.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence aux bras flexibles 122, 123, 124, 125 qui peuvent être d'un nombre diffèrent de quatre, par exemple d'un à huit. En outre, ils peuvent adopter des géométries différentes, notamment en ce qui concerne la gorge circonférentielles 122a, 125a. Alternativement, ils peuvent comprendre des excroissances radiales qui viennent se loger dans des niches ou des gorges prévues dans le trou traversant de la trappe. Enfin, la portion de verrouillage peut être pourvue avec une seule protrusion.

## Revendications

1. Dispositif de rangement pour un véhicule comprenant :
- au moins une paroi (10) formant un espace de rangement (1),
- une trappe (20) agencée pour fermer et ouvrir l'espace de rangement (1), et
- une pièce de verrouillage (100) agencée pour passer, par un mouvement, d'une position verrouillée, dans laquelle la trappe (20) est verrouillée à ladite au moins une paroi (10), à une position déverrouillée, dans laquelle la trappe (20) n'est pas verrouillée à ladite au moins une paroi (10), ladite pièce de verrouillage (100) comprenant pour cela :
• une surface continue d'appui (121) agencée pour être reçue en contact sur une surface continue d'appui (22) correspondante de la trappe (20) au moins dans la position verrouillée,
• une portion de verrouillage (131, 132, 131a, 132a) agencée pour être reçue en contact sur ladite au moins une paroi (10) au moins dans la position verrouillée,
et des moyens d'attache (122, 123, 124, 125, 122a, 125a) distincts de la surface continue d'appui (121) et de la portion de verrouillage (131, 132, 131a, 132a) et agencés pour attacher ladite pièce de verrouillage (100) sur la trappe (20),
**caractérisé en ce que** le mouvement de la pièce de verrouillage (100) est un mouvement de rotation, par exemple d'un quart de tour, ladite portion de verrouillage (131, 132, 131a, 132a) comprend deux surfaces d'appui allongées (131a, 132a) symétriques et transversales par rapport à l'axe longitudinal (A-A'), et **en ce que** ladite au moins une paroi (10) présente un trou de passage allongé (11) pour laisser passer la portion de verrouillage (131, 132, 131a, 132a), et **en ce que** ledit trou de passage allongé (11) est pourvu, au moins sur un bord, d'une arrête (12) comprenant une portion biseautée (12a) ainsi qu'une surface de butée (12b), la dite arrête (12) étant agencée pour être en contact avec ladite portion de verrouillage (131, 132, 131a, 132a) dans la position verrouillée.

2. Dispositif de rangement selon la revendication précédente, **caractérisé en ce que** ladite pièce de verrouillage (100) présente un axe longitudinal (A-A') et **en ce que** ladite surface continue d'appui (121) ainsi que ladite portion de verrouillage (131, 132, 131a, 132a) sont transversales à l'axe longitudinal (A-A').

3. Dispositif de rangement selon l'une quelconque des revendications précédentes, **caractérisé en ce que** les moyens d'attache (122, 123, 124, 125, 122a, 125a) sont des moyens d'emboitement élastique.

4. Dispositif de rangement selon l'une quelconque des revendications précédentes, **caractérisé en ce que** les moyens d'attache (122, 123, 124, 125, 122a, 125a) sont situés entre la surface continue d'appui (121) de la pièce de verrouillage (100) et la portion de verrouillage (131, 132, 131a, 132a) de la pièce de verrouillage (100).

5. Dispositif de rangement selon l'une quelconque des revendications précédentes, **caractérisé en ce que** les moyens d'attache (122, 123, 124, 125, 122a, 125a) comprennent au moins un bras flexible (122, 123, 124, 125) pourvu d'une gorge circonférentielle (122a, 125a).

6. Dispositif de rangement selon la revendication précédente, **caractérisé en ce que** la gorge circonférentielle (122a, 125a) de l'au moins un bras flexible (122, 123, 124, 125) est agencée de telle sorte à s'emboiter ou à s'engager avec une portion d'attache (23) de ladite trappe au moins dans la position déverrouillée.

7. Véhicule automobile comportant au moins un dispositif de rangement selon l'une quelconque des revendications précédentes.

## Patentansprüche

1. Speichervorrichtung für ein Fahrzeug, die Folgendes umfasst:
- mindestens eine Wand (10), die einen Speicherraum (1) bildet,
- eine Klappe (20), die eingerichtet ist, um den Speicherraum (1) zu schließen und zu öffnen, und
- ein Verriegelungsteil (100), das eingerichtet ist, um durch eine Bewegung von einer verriegelten Position, in der die Klappe (20) an der mindestens einen Wand (10) verriegelt ist, zu einer entriegelten Position, in der die Klappe (20) nicht an der mindestens einen Wand (10) verriegelt ist, überzugehen, wobei das Verriegelungsteil (100) zu diesem Zweck Folgendes umfasst:
• eine durchgehende Auflageoberfläche (121), die eingerichtet ist, um in Kontakt auf einer entsprechenden durchgehenden Auflageoberfläche (22) der Klappe (20) mindestens in der verriegelten Position aufgenommen zu sein,
• einen Verriegelungsabschnitt (131, 132, 131a, 132a), der eingerichtet ist, um in Kontakt auf der mindestens einen Wand (10) mindestens in der verriegelten Position aufgenommen zu sein,
und
Anbringungsmittel (122, 123, 124, 125, 122a, 125a), die von der durchgehenden Auflageoberfläche (121) und dem Verriegelungsabschnitt (131, 132, 131a, 132a) getrennt und eingerichtet sind, um das Verriegelungsteil (100) auf der Klappe (20) anzubringen,
**dadurch gekennzeichnet, dass**
die Bewegung des Verriegelungsteils (100) eine Drehbewegung ist, zum Beispiel eine Vierteldrehung, wobei der Verriegelungsabschnitt (131, 132, 131a, 132a) zwei längliche Auflageoberflächen (131a, 132a) umfasst, die zu der Längsachse (A-A') symmetrisch und quer sind, und dass die mindestens eine Wand (10) ein längliches Durchgangsloch (11) aufweist, um den Verriegelungsabschnitt (131, 132, 131a, 132a) durchgehen zu lassen, und dass das längliche Durchgangsloch (11) mindestens auf einem Rand mit einer Kante (12) versehen ist, die einen abgeschrägten Abschnitt (12a) umfasst, sowie mit einer Anschlagoberfläche (12b), wobei die Kante (12) eingerichtet ist, um mit dem Verriegelungsabschnitt (131, 132, 131a, 132a) in der verriegelten Position in Kontakt zu sein.

2. Speichervorrichtung nach dem vorstehenden Anspruch, **dadurch gekennzeichnet, dass** das Verriegelungsteil (100) eine Längsachse (A-A') aufweist, und dass die durchgehende Auflageoberfläche (121) sowie der Verriegelungsabschnitt (131, 132, 131a, 132a) zu der Längsachse (A-A') quer sind.

3. Speichervorrichtung nach einem der vorstehenden Ansprüche, **dadurch gekennzeichnet, dass** die Anbringungsmittel (122, 123, 124, 125, 122a, 125a) Mittel zum elastischen Einlassen sind.

4. Speichervorrichtung nach einem der vorstehenden Ansprüche, **dadurch gekennzeichnet, dass** die Anbringungsmittel (122, 123, 124, 125, 122a, 125a) zwischen der durchgehenden Auflageoberfläche (121) des Verriegelungsteils (100) und dem Verriegelungsabschnitt (131, 132, 131a, 132a) des Verriegelungsteils (100) liegen.

5. Speichervorrichtung nach einem der vorstehenden Ansprüche, **dadurch gekennzeichnet, dass** die Anbringungsmittel (122, 123, 124, 125, 122a, 125a) mindestens einen biegsamen Arm (122, 123, 124, 125), der mit einer umfänglichen Nut (122a, 125a) versehen ist, umfassen.

6. Speichervorrichtung nach dem vorstehenden Anspruch, **dadurch gekennzeichnet, dass** die umfängliche Nut (122a, 125a) des mindestens einen biegsamen Arms (122, 123, 124, 125) derart eingerichtet ist, dass sie sich in einen Anbringungsabschnitt (23) der Klappe mindestens in der entriegelten Position einpasst oder in diesen eingreift.

7. Kraftfahrzeug, das mindestens eine Speichervorrichtung nach einem der vorstehenden Ansprüche umfasst.

## Claims

1. A storage device for a vehicle, including:
- at least one wall (10) forming a storage space (1),
- a flap (20) arranged to close and open the storage space (1), and
- a locking part (100) arranged to pass, by a movement, from a locked position, in which the flap (20) is locked to said at least one wall (10), to an unlocked position, in which the flap (20) is not locked to said at least one wall (10), said locking part (100) including, for this:
• a continuous bearing surface (121) arranged to be received in contact on a corresponding continuous bearing surface (22) of the flap (20) at least in the locked position,
• a locking portion (131, 132, 131a, 132a) arranged to be received in contact on said at least one wall (10) at least in the locked position,
and
separate attachment means (122, 123, 124, 125, 122a, 125a) of the continuous bearing surface (121) and of the locking portion (131, 132, 131a, 132a) and arranged to attach said locking part (100) on the flap (20),
**characterized in that**
the movement of the locking part (100) is a rotation movement, for example of a quarter turn, said locking portion (131, 132, 131a, 132a) includes two elongated bearing surfaces (131a, 132a) which are symmetrical and transverse with respect to the longitudinal axis (A-A'), and **in that** said at least one wall (10) has an elongated through-hole (11) to allow the locking portion (131, 132, 131a, 132a) to pass, and **in that** said elongated through-hole (11) is provided, at least on one edge, with a crest (12) including a bevelled portion (12a) and also an abutment surface (12b), said crest (12) being arranged to be in contact with said locking portion (131, 132, 131a, 132a) in the locked position.

2. The storage device according to the preceding claim, **characterized in that** said locking part (100) has a longitudinal axis (A-A') and **in that** said continuous bearing surface (121) and also said locking portion (131, 132, 131a, 132a) are transverse to the longitudinal axis (A-A').

3. The storage device according to any one of the preceding claims, **characterized in that** the attachment means (122, 123, 124 125, 122a, 125a) are means for elastic interlocking.

4. The storage device according to any one of the preceding claims, **characterized in that** the attachment means (122, 123, 124, 125, 122a, 125a) are situated between the continuous bearing surface (121) of the locking part (100) and the locking portion (131, 132, 131a, 132a) of the locking part (100).

5. The storage device according to any one of the preceding claims, **characterized in that** the attachment means (122, 123, 124, 125, 122a, 125a) include at least one flexible arm (122, 123, 124, 125) provided with a circumferential groove (122a, 125a).

6. The storage device according to the preceding claim, **characterized in that** the circumferential groove (122a, 125a) of the at least one flexible arm (122, 123, 124, 125) is arranged so as to fit or engage with an attachment portion (23) of said flap at least in the unlocked position.

7. A motor vehicle comprising at least one storage device according to any one of the preceding claims.
